# EUROPÄISCHE PATENTSCHRIFT

(11) **EP 2 096 086 B1**
(45) Veröffentlichungstag und Bekanntmachung des Hinweises auf die Patenterteilung: **23.03.2011**
(21) Anmeldenummer: 08022121.1
(22) Anmeldetag: 19.12.2008
(51) Int. Cl.: C03B 9/453, C03B 9/38

(54) **Absetzplattenanordnung**
Dead plate assembly
Agencement de plaques de dépôt

(30) Priorität: 12.02.2008 DE 102008008630
(43) Veröffentlichungstag der Anmeldung: 02.09.2009
(73) Patentinhaber: Heye International GmbH, 31683 Obernkirchen (DE)
(72) Erfinder: Schwarzer, Siegfried, 31638 Stöckse (DE)
(74) Vertreter: Sobisch, Peter

(56) Entgegenhaltungen:
- EP-A- 0 149 890
- EP-A- 1 258 461
- US-A- 3 510 288
- US-A- 4 553 998

## Beschreibung

Die Erfindung bezieht sich auf eine Absetzplattenanordnung entsprechend dem Oberbegriff des Anspruchs 1.

Der Herstellungsprozess von Hohlglasartikeln in einer Glasformmaschine ausgehend von der Formgebung in einem Formwerkzeug bis zur Überführung in einen Kühlofen ist u. a. durch eine perforierte Absetzplatte gekennzeichnet, auf welche die Glasartikel in einer aufstehenden Position gelangen und der Kühlwirkung wenigstens eines Luftstromes ausgesetzt sind. Diese Kühlung ist zur Verbesserung der Stabilität der Glasartikel erforderlich, insbesondere mit Hinblick auf die sich im weiteren Verfahrensablauf unmittelbar anschließenden, mit unvermeidbaren mechanischen Beanspruchungen verbundenen Transportvorgänge. Es ist bekannt, die Absetzplatte als oberen horizontalen Abschluss einer Kammer zu konzipieren, die mit Kühlluft beaufschlagt wird, die über Öffnungen der Absetzplatte austritt und eine Kühlwirkung auf die auf dieser aufstehenden Glasartikel ausüben soll. Eine solche Absetzplattenanordnung zeigen beispielsweise die DE 100 39 343 A1 und die DE 27 15 647 A1.

Vor dem Überschieben auf ein, in den Kühlofen einmündendes Förderbandsystem ist somit eine Mindestkühlung der Hohlglasartikel erforderlich, deren unvermeidbarer Zeitbedarf jedoch ein den Durchsatz der Glasformmaschine begrenzendes Moment bildet und mit der Forderung nach einer Steigerung der Kühlintensität einhergeht. Einer Steigerung des Kühlluftstromes sind unter Berücksichtigung der Standsicherheit der Glasgefäße und eines Risikos möglicher Beschädigungen verhältnismäßig enge Grenzen gesetzt. Hinzutritt, dass selbst Positionsverlagerungen der Glasartikel mit Rücksicht auf den Wirkungsbereich eines diese nach erfolgter Kühlung auf das Förderbandsystem bewegenden Überschiebermechanismus zu vermeiden sind.

Aus der GB 2 123 402 A ist eine Absetzplattenanordnung bekannt, deren Absetzplatte mit Öffnungen in gleichförmiger Verteilung versehen ist und den oberen Abschluss einer Kammer bildet, die über eine zentrale Rohrleitung zur Generierung eines aufsteigenden, aus den Öffnungen austretenden und über einen Ringspalt zur Generierung einer Saugwirkung und damit eines über die Öffnungen eintretenden, somit nach unten gerichteten Kühlluftstromes eingerichtet ist. Der zu kühlende Glasartikel wird zunächst mit den zangenartigen Haltern eines Take-out-Mechanismus oberhalb der Absetzplatte gehalten, wobei ein abwärts gerichteter, den Glasartikel umgebender Kühlluftstrom erzeugt wird. Nachdem ein zylindrischer, den Glasartikel mit Abstand umgebender Hüllkörper aus der Ebene der Absetzplatte ausgefahren ist, wird ein aufwärts gerichteter Kühlluftstrom erzeugt, der eine Kühlwirkung insbesondere im Bodenbereich des Glasartikels bereitstellen soll. Nach Ablauf eines vorherbestimmten Zeitintervalls erfolgt ein Absetzen des Glasartikels auf der Absetzplatte und ein anschließendes Überführen auf ein Förderband. Nachteilig an dieser Ausführungsform ist, dass eine bodenseitige Kühlung des Glasartikels ein Halten desselben oberhalb der Ebene der Absetzplatte erforderlich macht. Dies bedeutet, dass die Halter des Take-out-Mechanismus während dieser Zeit jedenfalls noch nicht zur Aufnahme weiterer Glasartikel aus einem Formwerkzeug der Glasformmaschine zur Verfügung stehen.

Eine bodenseitige Kühlung des oberhalb einer Absetzplatte gehaltenen Glasartikels ist auch aus der EP 0 321 522 B1 bekannt, wobei jedoch die Kühlluft zur Verbesserung der Kühlleistung mit einem Tieftemperaturfluid z. B. flüssigem CO₂, N₂ oder auch He konditioniert wird. Diese Verfahrensweise ist jedoch mit einem beträchtlichen zusätzlichen anlagentechnischen Aufwand sowie den weiteren Kosten des Fluids verbunden.

Aus der EP 0 149 590 A1 ist eine Absetzplattenanordnung bekannt, bei deren Absetzplatte jedem zu kühlenden Hohlglasartikel ein zentrale bodenseitige Öffnung und eine Anordnung radial verlaufender, in Umfangsrichtung gleichförmig verteilter, sich ausgehend von einem Bereich unterhalb des Bodens bis in einen Bereich radial außerhalb des Bodens erstreckender Oberflächenrillen zugeordnet sind. Die Bereiche zwischen den Rillen bilden eine Stützfläche für den Glasartikel, welcher ferner von einer zu der zentralen Öffnung konzentrischen Anordnung schlitzförmiger Düsen umgeben ist. Die zentrale Öffnung ist mit Unterdruck beaufschlagt, so dass sich ein erster, den Boden des Glasgefäßes kühlender Luftstrom aus der Umgebung über die Oberflächenrillen und die genannte zentrale Öffnung in ein, an diese angeschlossenes Saugrohr ergibt. Die Absetzplatte bildet das obere Teil einer Kammer, welche mit Druckluft beaufschlagt ist, so dass sich ein zweiter, aus den Düsen austretender, die Seitenwandungen des Glasartikels gleichförmig umgebender und diese kühlender Luftstrom ergibt. Das Saugrohr sowie die Kammer sind unter Zwischenanordnung von steuerbaren Ventilen an die Saugseite bzw. die Druckseite eines Gebläses angeschlossen, so dass ein an den Arbeitstakt der Glasformmaschine angepasster Betrieb möglich ist. Insbesondere die Unterdruckbeaufschlagung soll dazu beitragen, die Aufstandsicherheit des Glasartikels auch bei hohem Durchsatz zu verbessern. Zwar wird bei dieser Ausführungsform eine bodenseitige Kühlung des aufstehenden Glasartikels erreicht - einer wesentlichen Steigerung der Kühleffizienz steht jedoch u. a. der Nachteil einer geringen maximalen Druckdifferenz als treibender Kraft eines auf einer Saugwirkung beruhenden Kühlluftstromes entgegen.

Diese bekannten Absetzplattenanordnungen erfordern somit einen Kompromiss zwischen einer ausreichenden Bodenkühlung der Artikel und einem Risiko von transportbedingten Schäden. Sie bieten somit zumindest keine konstruktiv einfach darstellbaren Lösungsansätze zur Steigerung der Kühlleistung und damit eines Durchsatzes an Glasartikeln.

Es ist die Aufgabe der Erfindung, eine Absetzplattenanordnung der eingangs bezeichneten Art in einfacher Weise unter Wahrung der Aufstandsicherheit der Hohlglasartikel mit Hinblick auf eine Steigerung der Kühleffizienz bzw. Kühlleistung hin auszugestalten. Gelöst ist diese Aufgabe bei einer solchen Absetzplattenanordnung durch die Merkmale des Kennzeichnungsteils des Anspruchs 1.

Wesentlich ist, dass zur Kühlung des Bodens des auf der Absetzplatte aufstehenden Hohlglasartikels eine Kühlluftströmung eingerichtet ist, die in einem Wärmeaustausch mit dem Boden steht, wobei jedoch die Ausbildung eines, die Standsicherheit des Artikels gefährdenden Staudrucks dadurch vermieden wird, dass die in Richtung auf den Boden hin geführte Kühlluft weitestgehend behinderungsfrei abströmen kann. Unter dem Boden des Artikels ist somit ein Raum eingerichtet, der auf einer Seite großflächig durch die zugekehrte Oberfläche des Bodens gebildet wird und der von der Kühlluft unter Wärmeaufnahme durchströmt wird. Die Strömungsführung ist mit der Maßgabe angelegt, dass ein flächiger, zur Wärmeübertragung von dem Boden geeigneter Kontakt bei möglichst geringen Druckverlusten dargestellt wird. Jede Strömungsführung, mit der diese Randbedingungen zumindest angenähert erfüllt sind, kann zwischen den zur Zufuhr sowie zur Abfuhr von Kühlluft bestimmten Öffnungen der Absetzplatte zur Lösung der vorstehend bezeichneten Aufgabe in Betracht gezogen werden. Dadurch, dass ein Druckaufbau unter dem Boden des Hohlglasartikels nur nach Maßgabe unvermeidbarer Strömungswiderstände der Kühlluftführung entsteht, kann der Kühlluftdurchsatz jedenfalls gegenüber dem eingangs dargelegten Stand der Technik beträchtlich gesteigert werden, ein Umstand, der demgegenüber zur Erhöhung der Kühlleistung und damit zur Durchsatzerhöhung des Glasformprozesses genutzt werden kann. Der Ansatz zur Lösung der eingangs dargestellten Aufgabenstellung besteht somit in Maßnahmen, welche die Strömungsführung der Kühlluft unterhalb des Hohlglasartikels betreffen, welche sämtlich darauf abzielen, Strömungswiderstände zu minimieren, so dass bei begrenztem Staudruck die Aufstandsicherheit des Hohlglasartikels gewahrt ist und ein unter Wahrung dieser Bedingung größtmöglicher Kühlluftdurchsatz darstellbar ist.

Ausgangspunkt sind hierbei Hohlglasartikel mit einem konkav gekrümmten, beispielsweise kugelabschnittförmigen Boden, der, einen peripher begrenzt durch die Aufstandfläche und im übrigen durch die zugekehrte Oberfläche der Absetzplatte umgrenzten Hohlraum definiert, der zum Durchströmen mit Kühlluft benutzt wird. Durch die beispielsweise zumindest angenähert querschnittsgleich bemessenen, für die Zufuhr von Kühlluft in sowie die Abfuhr von Kühlluft aus diesem Raum bestimmten Öffnungen der Absetzplatte ist sichergestellt, dass auch bei hohem Kühlluftdurchsatz ein Druckaufbau unter dem Boden des Hohlglasartikels begrenzt bleibt. Unter Berücksichtigung des Wärmeübergangs auf die Kühlluft kommt grundsätzlich auch eine solche Bemessung der Querschnitte für die Zufuhr und die Abfuhr von Kühlluft in Betracht, bei der Letztere größer ausfallen. Die Gestaltung der genannten Öffnungen sowie deren Verteilung in der Fläche der Absetzplatte ist in jedem Fall mit Hinblick auf die Darstellung einer möglichst druckverlustarmen, jedoch einen intensiven Wärmeaustausch mit dem Boden vermittelnden Strömung angelegt.

Gemäß den Merkmalen des Anspruchs 2 ist zusätzlich zu der bodenseitigen Kühlung eine wandungsseitige Kühlung vorgesehen, welche durch eine, mit der Kühlluftzuleitung in Verbindung stehende Anordnung von Öffnungen der Absetzplatte radial außerhalb der Aufstandfläche des Hohlglasartikels dargestellt ist. Wesentlich für diese Anordnung ist, dass eine in peripherer Richtung gleichförmige Kühlung des Artikels erreicht wird, welches die Einstellung einer dementsprechend angelegten, die Oberfläche des Artikels gleichförmig überstreichenden Strömung erfordert.

Im einfachsten Fall sind alle Kühlluftströme zusammengefasst und nur einheitlich steuerbar. Die bodenseitigen sowie die seitlichen Kühlluftströme können jedoch auch unabhängig voneinander steuerbar sein. Insbesondere kann die Möglichkeit eines intervallweisen Betriebes oder eines programmgesteuerten Betriebes nach einem beliebig vorgebbaren Zeitplan für die seitlichen und/oder der bodenseitigen Kühlluftströme vorgesehen sein. Auch ist auf diesem Wege die Darstellung eines die Kühlluftströme in Abhängigkeit von einer festgestellten Kühlwirkung beeinflussenden Regelkreises möglich.

Besonders vorteilhaft in diesem Zusammenhang gemäß den Merkmalen des Anspruchs 3 der Einsatz von Proportionalventilen, welche die Einstellung von für Zwecke der Kühlwirkung optimierten Kühlluftströme ermöglichen.

Die Merkmale des Anspruchs 4 sind auf eine konstruktiv einfach darstellbare Ausführungsform der Absetzplatte gerichtet, deren für eine Zufuhr von Kühlluft bestimmte Öffnungen über einzelne Rohrleitungen mit einer als Sammelleitung konzipierten Kühlluftzuleitung in Verbindung stehen. Die Absetzplatte bildet im allgemeinen die eine Wandung eines Gehäuses, welches in diesem Falle gleichzeitig zum Auffangen der erwärmten Kühlluft und deren geordneter Entsorgung dienen kann.

Die Merkmale des Anspruchs 5 sind auf eine weitere Ausgestaltung der Absetzplatte gerichtet, wobei eine Kühlwirkung zusätzlich entlang einer Verschiebebahn der Hohlglasartikel dargestellt ist. Dieser kann in ähnlicher Weise wie in der Aufstandfläche bodenseitigen Kühlluftströmen ausgesetzt sein, die hinsichtlich einer Staudruckentwicklung sowie eines Kühlluftdurchsatzes optimiert sind. Hier kommen jedoch auch einfachere Kühlluftführungen in Betracht.

Die erfindungsgemäße Absetzplattenanordnung ermöglicht in jedem Fall aufgrund der Darstellung eines definierten Strömungsfeldes unterhalb des Bodens der Hohlglasartikel einen im Vergleich zu dem eingangs dargelegten Stand der Technik beträchtlich erhöhten Durchsatz an Kühlluft ohne ein Risiko nachteiliger Auswirkungen auf den Glasformprozess im Übrigen.

Die Erfindung wird im Folgenden unter Bezugnahme auf die in den Zeichnungen schematisch wiedergegebenen Ausführungsbeispiele näher erläutert werden. Es zeigen:
Fig. 1 ein Ausführungsbeispiel einer erfindungsgemäßen Absetzplattenanordnung in einem Vertikalschnitt;
Fig. 2 eine Draufsicht auf eine erfindungsgemäße Absetzplattenordnung nebst einer dem zugeordneten Behältertransportbahn.

Mit 1 ein zu kühlender Hohlglasartikel bezeichnet, dessen Boden 2 eine zur Außenseite hin konkave und zu der Längsachse 3 des Artikels rotationssymmetrische Krümmung aufweist. Eine unmittelbare Aufstandfläche 2" wird somit lediglich durch eine, die äußere Berandung des Bodens 2 bildende, vergleichsweise schmale Ringfläche 2' gebildet.

Mit 4 ist eine Absetzplatte bezeichnet, die in zeichnerisch nicht dargestellter Weise den oberen horizontalen Abschluss eines Gehäuses bildet. Die Absetzplatte 4 ist mit einer Verteilung von Öffnungen versehen, die teilweise mit Rohrleitungen 5, 5' in durchgängiger Verbindung stehen und teilweise lediglich durchgängige Verbindungen zwischen den Halbräumen unterhalb und oberhalb der horizontal gehaltenen Absetzplatte 4 darstellen.

Sämtliche Rohrleitungen 5, 5' sind in einer Kühlluftleitung 6 zusammengefasst, die mit einer zeichnerisch nicht dargestellten Druckquelle, z. B. einem Gebläse in Verbindung steht, welches Kühlluft in Richtung des Pfeiles 7 fördert.

Der Boden 2 begrenzt mit der zugekehrten Oberfläche der Absetzplatte 4 einen kugelabschnittförmigen Hohlraum 8 und es ist die Verteilung der genannten Öffnungen in Abhängigkeit von der Aufstandfläche 2" eines Hohlglasartikels 1 mit der Maßgabe angelegt, dass innerhalb der Aufstandfläche die Gesamtheit der Querschnitte aller, mit den Rohrleitungen 5' in durchgängiger Verbindung stehenden Öffnungen 9 und die Gesamtheit der Querschnitte aller übrigen, innerhalb der Aufstandfläche gelegenen Öffnungen 9', an denen keine Rohrleitungen angeschlossen sind, mit der Maßgabe bemessen sind, dass innerhalb des Hohlraumes 8 ein maximaler Durchsatz an Kühlluft erreicht wird, ohne dass durch den hiermit einhergehenden Staudruck die Aufstandsicherheit bzw. die Standsicherheit der Hohlglasartikel 1 gefährdet wird. Es soll somit die Strömungsführung durch den Hohlraum 8, in welche auch die Gestaltung und Bemessung der Öffnungen 9' einbezogen ist, dahingehend angelegt sein, dass die Staudruckentwicklung trotz eines im Vergleich zu dem eingangs dargelegten Stand der Technik erhöhten Kühlluftdurchsatzes so gering wie möglich ausfällt, in jedem Fall die Aufstandsicherheit der Hohlglasartikel nicht beeinträchtigt.

Mit dem somit erhöhten Durchsatz an Kühlluft ist ein verbesserter Wärmeaustrag verbunden, so dass die für eine ausreichende Kühlung benötigte Zeitspanne vermindert werden kann.

Mit 9" ist eine die Ringfläche 2' radial außenseitig in gleichförmiger Verteilung umgebende Anordnung von Öffnungen bezeichnet, an die ebenfalls Rohrleitungen 5 angeschlossen sind. Die aus den oberseitigen Mündungen dieser Öffnungen 9" austretende Kühlluft umgibt den Hohlglasartikel 1 und steht in einem in peripherer Richtung gesehen gleichförmigen Wärmeaustausch mit dessen Seitenwandungen.

Die oberseitig aus den Öffnungen 9" austretende Kühlluft kann im Anschluss an ihre Führung entlang des Hohlglasartikels 1 im einfachsten Fall in gleicher Weise wie die unterseitig aus den Öffnungen 9' austretende Kühlluft in die umgebende Atmosphäre entweichen. Diese wärmeführenden Luftströme, insbesondere der über die Öffnungen 9' unterhalb des Hohlraumes 8 austretende Luftstrom können jedoch auch zur Entlastung der unmittelbaren Umgebung aufgefangen und einer geordneten Entsorgung zugeführt werden.

Die Kühlluftversorgung ist zweckmäßigerweise dahingehend ausgestaltet, dass im einfachsten Fall der insgesamt zur Verfügung stehende, über die Kühlluftzuleitung 6 eingebrachte Luftstrom veränderbar ist. In weiterer Ausgestaltung können die bodenseitigen und seitlichen Kühlluftströme durch Zwischenanordnung von Ventilen in den gezeigten Rohrleitungen 5, 5' auch individuell steuerbar angelegt sein, so dass örtlich unterschiedliche Kühlleistungen zur Verfügung stehen.

Man erkennt anhand der vorstehenden Ausführungen, dass mit der erfindungsgemäßen Absetzplattenanordnung in konstruktiv einfacher Weise eine schnellere Kühlung insbesondere des Bodens eines Hohlglasartikels 1 darstellbar ist, ein Umstand, der in einfacher Weise zu einer Durchsatzsteigerung des Glasformgebungsverfahrens nutzbar ist.

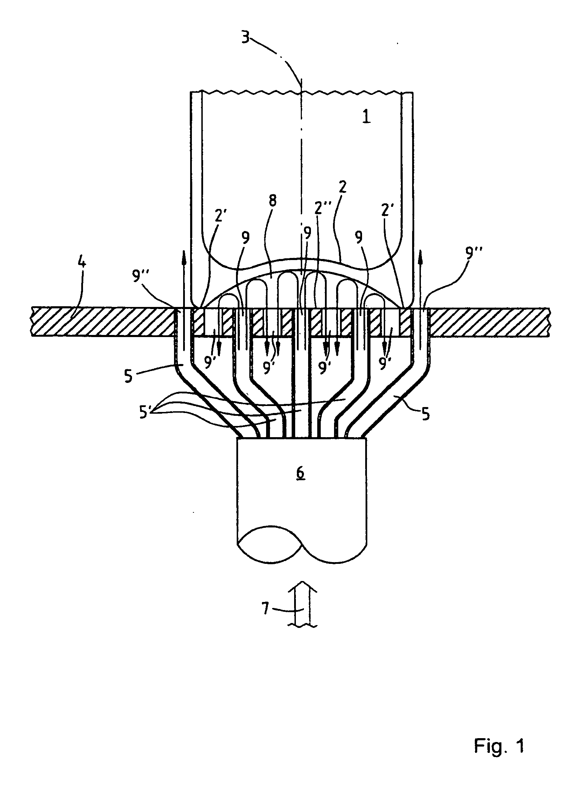

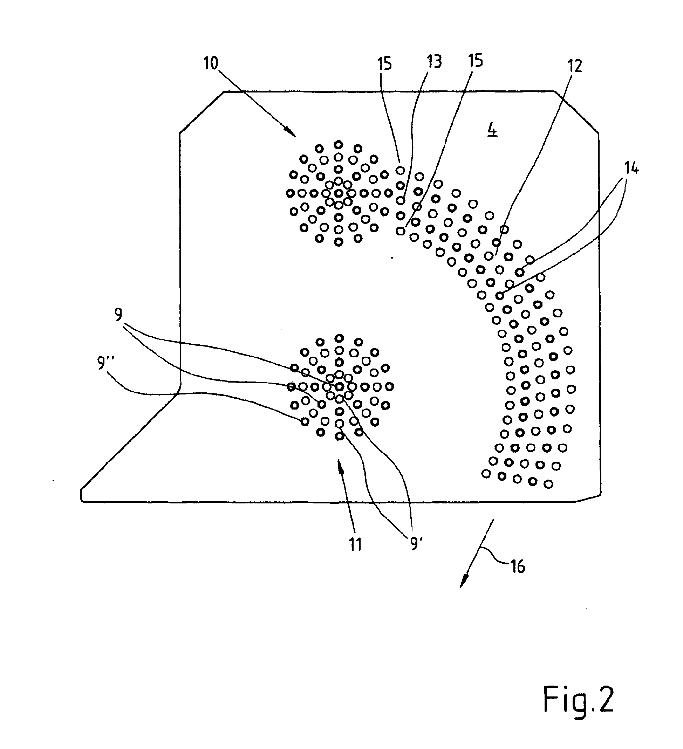

Fig. 2 zeigt eine Absetzplatte 4, auf der lediglich beispielhaft zwei untereinander gleiche, voneinander beabstandete Aufstandpositionen 10, 11 für Hohlglasartikel dargestellt sind, die jeweils durch zueinander konzentrische Anordnungen von Öffnungen 9, 9', 9" gekennzeichnet sind und die somit der in Fig. 1 gezeigten Absetzplattenanordnung entsprechen.

Um die Kühlwirkung, welche die Hohlglasartikel in diesen Aufstandpositionen 10, 11 erfahren, auch entlang ihres Verschiebeweges 12 auf der Absetzplatte 4 in Richtung auf ein zeichnerisch nicht dargestelltes Förderband hin fortzusetzen, ist der Verschiebeweg durch eine Hintereinanderanordnung von Öffnungen gekennzeichnet. Es handelt sich um eine zentrale Reihe von Öffnungen 13, die sich zwischen zwei Reihen von Öffnungen 14 befindet, wobei sich beiderseits der letztgenannten Reihen, und zwar jeweils in auswärtiger Richtung von diesen jeweils eine weitere Reihe von Öffnungen 15 befindet.

Sämtliche dieser Reihen erstrecken sich entlang zueinander konzentrischer Kreisbahnen, so dass sich eine durch den Pfeil 16 angedeutete Verschieberichtung ergibt. Ein geradliniger Verschiebeweg oder ein nach sonstigen Gesetzmäßigkeiten gekrümmter Verlauf kommen jedoch ebenfalls in Betracht.

Wesentlich ist, dass in Analogie zu der Zweckbestimmung der Öffnungen 9, 9' innerhalb der Ringfläche 2' (Fig. 1) die Öffnungen 13, 15 der zentralen sowie der beiden äußeren Reihen mit einer Kühlluftzuleitung in Verbindung stehen und dass die Öffnungen 14 der beiden Reihen beiderseits der genannten zentralen Reihe zur Abfuhr von Kühlluft eingerichtet sind. Wesentlich ist ferner, dass die Strömungsführung bzw. die Bemessung der Querschnitte der Öffnungen13, 14, 15 der genannten Reihen in gleicher Weise angelegt ist wie diejenige der Öffnungen 9, 9' einer Absetzplattenanordnung bzw. Aufstandposition 10, 11, so dass innerhalb des von der Aufstandfläche 2" radial und dem Boden 8 eines Hohlglasartikels 1 im Übrigen umgrenzten Hohlraumes 8 unter Wahrung der Aufstandsicherheit, somit einer begrenzten Staudruckentwicklung ein größtmöglicher Kühlluftdurchsatz darstellbar ist und hiermit einhergehend eine größtmögliche Kühleffizienz.

Anstelle der gezeigten peripher verteilten Öffnungen 9, 9', 9" einer Aufstandposition 10, 11 können auch beliebige andere Querschnittsgeometrien benutzt werden, insbesondere Ringschlitze.

## Patentansprüche

1. Absetzplattenanordnung für eine Glasformmaschine, bestehend zumindest aus einer, in einem Maschinenrahmen horizontal gehaltenen, zum Aufsetzen von wenigstens einem zu kühlenden, eine Aufstandfläche (2") aufweisenden Hohlglasartikel (1) bestimmten, mit zum Durchtritt von Kühlluft bestimmten Öffnungen (9, 9', 9") versehenen Absetzplatte (4) und einer Kühlluftzuleitung (6), **dadurch gekennzeichnet, dass** ein Teil der innerhalb der Aufstandfläche (2") gelegenen Öffnungen (9) zur Zufuhr von Kühlluft eingerichtet und mit der Kühlluftzuleitung (6) in Verbindung steht, dass der innerhalb der Aufstandfläche (2") verbleibende Teil der Öffnungen (9') zur Abfuhr von Kühlluft eingerichtet ist, dass der Boden (2) des auf der Absetzplatte (4) aufstehenden Hohlglasartikels (1) mit der zugekehrten Oberfläche der Absetzplatte (4) einen peripher durch die Aufstandfläche (2") begrenzten Hohlraum (8) bildet und dass die für die Zu- und Abfuhr bestimmten Öffnungen (9, 9') an diesen Hohlraum (8) anschließen, so dass zwischen den Öffnungen (9, 9') eine flächige, einen Wärmeaustausch mit dem Boden (2) des Hohlglasartikels (1) vermittelnde Strömungsführung der Kühlluft eingerichtet ist.

2. Absetzplattenanordnung nach Anspruch 1, **dadurch gekennzeichnet, dass** die Aufstandfläche (2") des Hohlglasartikels (1) von einer Anordnung von für eine den Hohlglasartikel umgebende Kühlluftströmung bestimmte Öffnungen (9") in gleichförmiger Verteilung umgeben ist.

3. Absetzplattenanordnung nach Anspruch 1 oder 2, **dadurch gekennzeichnet, dass** zur Steuerung der Kühlluft pneumatische, insbesondere elektropneumatische Proportionalventile eingesetzt sind.

4. Absetzplattenanordnung nach einem der Ansprüche 1 bis 3, **dadurch gekennzeichnet, dass** die der Zufuhr von Kühlluft bestimmten Öffnungen (9, 9') der Absetzplatte (4) über individuelle Rohrleitungen (5, 5') mit der als Sammelleitung konzipierten Kühlluftzuleitung (6) in Verbindung stehen.

5. Absetzplattenanordnung nach einem der Ansprüche 1 bis 4, **dadurch gekennzeichnet, dass** zumindest einer Aufstandfläche (2") der Absetzplatte (4) ein Verschiebeweg (12) zum Abtransport eines aufstehenden Hohlglasartikels (1) zugeordnet ist, und dass der Verschiebeweg (12) eine Verteilung von Öffnungen (13, 14, 15) zur Zu- und Abfuhr von Kühlluft, entlang des Verschiebeweges (12) eine Kühlwirkung auf den Hohlglasartikel ausübend, aufweist.

## Claims

1. Dead plate arrangement for a glassware forming machine, consisting at least of a dead plate (4), which is held horizontally in a machine frame, is intended for the setting down of at least one hollow glass object (1), which is to be cooled and has a standing surface (2"), and is provided with openings (9, 9', 9") intended for the passage of cooling air, and of a cooling air supply line (6), **characterised in that** some of the openings (9) located within the standing surface (2") are arranged for the supply of cooling air and are connected to the cooling air supply line (6), that some of the openings (9') still within the standing surface (2") are arranged for the discharge of cooling air, that the base (2) of the hollow glass object (1) standing on the dead plate (4) forms, with the facing surface of the dead plate (4), a hollow space (8) peripherally defined by the standing surface (2"), and that the openings (9, 9') intended for supply and discharge are connected to this hollow space (8) so that between the openings (9, 9') a laminar flow guide for the cooling air is provided, which procures a heat exchange with the base (2) of the hollow glass object (1).

2. Dead plate arrangement as claimed in claim 1, **characterised in that** the standing surface (2") of the hollow glass object (1) is surrounded by an arrangement of uniformly distributed openings (9") intended for a flow of cooling air surrounding the hollow glass object.

3. Dead plate arrangement as claimed in claim 1 or 2, **characterised in that** pneumatic, in particular electropneumatic, proportional valves are used to control the cooling air.

4. Dead plate arrangement as claimed in any one of claims 1 to 3, **characterised in that** the openings (9, 9') of the dead plate (4), which are intended to supply cooling air, are connected via individual pipe lines (5, 5') to the cooling air supply line (6) designed as a collector line.

5. Dead plate arrangement as claimed in any one of claims 1 to 4, **characterised in that** at least one standing surface (2") of the dead plate (4) is allocated a displacement path (12)
for carrying away a standing hollow glass object (1), and that the displacement path (12) has a distributed arrangement of openings (13, 14, 15) for the supply and discharge of cooling air along the displacement path (12) exerting a cooling effect on the hollow glass object.

## Revendications

1. Agencement de plaques de dépôt pour une machine à mouler le verre, composé d'au moins une plaque de dépôt (4) pourvue d'ouvertures (9, 9', 9") prévues pour le passage d'air de refroidissement, maintenue horizontalement dans un cadre de machine et destinée au dépôt d'au moins un article en verre creux (1) à refroidir, comportant une surface d'appui (2"), et une conduite d'amenée d'air de refroidissement (6), **caractérisé en ce qu'**une partie des ouvertures (9) ménagées à l'intérieur de la surface-d'appui (2") sont prévues pour l'admission de l'air de refroidissement et reliées à la conduite d'amenée d'air de refroidissement (6), **en ce que** les ouvertures (9') restantes à l'intérieur de la surface d'appui (2") sont prévues pour l'évacuation de l'air de refroidissement, **en ce que** le fond (2) de l'article en verre creux (1) dressé sur la plaque de dépôt (4) forme avec la surface opposée de la plaque de dépôt (4) une cavité (8) dont la périphérie est délimitée par la surface d'appui (2"), et **en ce que** les ouvertures (9, 9') prévues pour l'admission et l'évacuation sont adjacentes à cette cavité (8), de manière à former entre les ouvertures (9, 9') un trajet de circulation superficielle de l'air de refroidissement, réalisant un échange de chaleur avec le fond (2) de l'article en verre creux (1).

2. Agencement de plaques de dépôt selon la revendication 1, **caractérisé en ce que** la surface d'appui (2") de l'article en verre creux (1) est entourée à intervalles réguliers par un agencement d'ouvertures (9") pour la circulation d'air de refroidissement entourant l'article en verre creux.

3. Agencement de plaques de dépôt selon la revendication 1 ou la revendication 2, **caractérisé en ce que** des vannes proportionnelles pneumatiques, en particulier des vannes proportionnelles électropneumatiques sont utilisées pour la commande de l'air de refroidissement.

4. Agencement de plaques de dépôt selon l'une des revendications 1 à 3, **caractérisé en ce que** les ouvertures (9, 9') de la plaque de dépôt (4) destinées à l'amenée d'air de refroidissement sont reliées par des canaux individuels (5, 5') à la conduite d'amenée d'air de refroidissement (6) réalisée comme conduite collectrice.

5. Agencement de plaques de dépôt selon l'une des revendications 1 à 4, **caractérisé en ce qu'**une voie de déplacement (12) pour le transport d'un article en verre creux (1) dressé est associée à au moins une surface d'appui (2") de la plaque de dépôt (4), et **en ce que** la voie de déplacement (12) présente une distribution d'ouvertures (13, 14, 15) pour l'admission et l'évacuation d'air de refroidissement, exerçant une action de refroidissement sur l'article en verre creux le long de la voie de déplacement (12).
